# EUROPÄISCHE PATENTSCHRIFT

(11) **EP 2 933 985 B1**
(45) Veröffentlichungstag und Bekanntmachung des Hinweises auf die Patenterteilung: **30.05.2018**
(21) Anmeldenummer: 14165232.1
(22) Anmeldetag: 17.04.2014
(51) Int. Cl.: H04L 29/12, H04L 12/931

(54) **Verwendung von Multicast DNS**
Use of multicast DNS
Utilisation de multidiffusion DNS

(43) Veröffentlichungstag der Anmeldung: 21.10.2015
(73) Patentinhaber: Siemens Aktiengesellschaft, 80333 München (DE)
(72) Erfinder: Gerlach, Hendrik, 91058 Erlangen (DE); Schönmüller, Bernd, 90475 Nürnberg (DE)

(56) Entgegenhaltungen:
- EP-A1- 2 383 940
- QUTAIBA I ALI ET AL: "Enhancement of Industrial Ethernet Performance Using Multicasting/VLAN techniques", INFORMATION AND COMMUNICATION TECHNOLOGIES: FROM THEORY TO APPLICATIONS, 2008. ICTTA 2008. 3RD INTERNATIONAL CONFERENCE ON, IEEE, PISCATAWAY, NJ, USA, 7. April 2008 (2008-04-07), Seiten 1-6, XP031258322, ISBN: 978-1-4244-1751-3
- JUN WANG ET AL: "IGMP snooping: a VLAN-based multicast protocol", HIGH SPEED NETWORKS AND MULTIMEDIA COMMUNICATIONS 5TH IEEE INTERNATION AL CONFERENCE ON JUL. 3-5, 2002, PISCATAWAY, NJ, USA,IEEE, 3. Juli 2002 (2002-07-03), Seiten 335-340, XP010603050, ISBN: 978-0-7803-7600-7
- CHESHIRE M KROCHMAL APPLE INC S: "Multicast DNS; rfc6762.txt", MULTICAST DNS; RFC6762.TXT, INTERNET ENGINEERING TASK FORCE, IETF; STANDARD, INTERNET SOCIETY (ISOC) 4, RUE DES FALAISES CH- 1205 GENEVA, SWITZERLAND, 20. Februar 2013 (2013-02-20), Seiten 1-70, XP015090289, [gefunden am 2013-02-20]

## Beschreibung

Die Erfindung betrifft ein Verfahren zur Verwendung von Multicast DNS in einem Kommunikationsnetzwerk und einen Multicastfilter zur Verwendung von Multicast DNS.

Aus dem Artikel "Enhancement of Industrial Ethernet Performance Using Multicasting/VLAN techniques" von Qutaiba et al., Information and Communication Technologies: From Theory to Applications, ICTTA 2008, 3rd international Conference , ISBN 978-1-4244-1751-3, Seiten 1-6, ist die Verwendung von Multicast in einem industriellen Ethernet mit Teilnehmergruppen und Subnetzen bekannt.

Multicast DNS (mDNS) bezeichnet einen Dienst zur Namensauflösung von Namen für Geräte und/oder Dienste in Kommunikationsnetzwerken, bei der Namen für Geräte und/oder Dienste in Netzwerkadressen, beispielsweise in IP-Adressen (IP = Internet Protocol), übersetzt werden. Multicast DNS wurde für relativ kleine Kommunikationsnetzwerke als eine Alternative beispielsweise zum im Internet verwendeten DNS ( = Domain Name System) entwickelt. Im Unterschied zu DNS werden bei Multicast DNS Anfragenachrichten zur Namensauflösung nicht von DNS-Servern bearbeitet und beantwortet, sondern als Multicastnachrichten an eine Mehrzahl von Teilnehmern gesendet und von Teilnehmern mit angefragten Namen beantwortet. Multicast DNS ist beispielsweise als RFC 6762 (RFC = Request for Comments) veröffentlicht.

Die Verwendung von Multicast DNS bietet sich als eine Alternative zu DNS in verschiedenen Bereichen an, in denen eine für DNS erforderliche Verwaltung von DNS-Servern zu aufwändig oder aus anderen Gründen unerwünscht ist. Beispielsweise könnte die Verwendung von Multicast DNS in der Automatisierungstechnik interessant sein. In der Automatisierungstechnik werden nämlich gegenwärtig noch ausschließlich Netzwerkadressen, und zwar vorwiegend IPv4-Adressen mit jeweils 32 Bit verwendet. Eine Umstellung auf IPv6-Adressen mit jeweils 128 Bit erweist sich in Automatisierungssystemen aufgrund der Länge dieser Adressen als problematisch. Für eine derartige Umstellung könnte Multicast DNS nützlich sein. Allerdings ist eine direkte Verwendung von Multicast DNS in Automatisierungssystemen
wenig zielführend, da ein Automatisierungssystem in der Regel eine Vielzahl von Teilnehmern aufweist und die Verwendung von Multicast DNS daher eine das Kommunikationsnetzwerk zu stark belastende Anzahl von Multicastnachrichten mit sich bringen würde, zumal Automatisierungssysteme in der Regel flach aufgebaut sind, d. h. keine Router aufweisen, die den Ausbreitungsbereich der Multicastnachrichten eingrenzen könnten.

Der Erfindung liegt die Aufgabe zugrunde, eine verbesserte Verwendung von Multicast DNS insbesondere für Kommunikationsnetzwerke mit vielen Teilnehmern und ein Vorrichtung zu einer derartigen Verwendung von Multicast DNS anzugeben.

Die Aufgabe wird erfindungsgemäß hinsichtlich des Verfahrens zur Verwendung von Multicast DNS durch die Merkmale des Anspruchs 1 und hinsichtlich der Vorrichtung durch die Merkmale des Anspruchs 7 gelöst.

Vorteilhafte Ausgestaltungen der Erfindung sind Gegenstand der Unteransprüche.

Bei einer erfindungsgemäßen Verfahren zur Verwendung von Multicast DNS in einem Kommunikationsnetzwerk mit mehreren jeweils eine Netzwerkadresse aufweisenden Teilnehmern wird das Kommunikationsnetzwerk mit einem Multicastfilter versehen, der wenigstens einen zum Senden von Multicast DNS-Nachrichten geeigneten Filterport aufweist und über den Multicast DNS-Anfragenachrichten geleitet werden. Ferner werden Teilnehmergruppen von Teilnehmern definiert, die Teilnehmer jeder Teilnehmergruppe mit jeweils wenigstens einem Filterport verbunden und jedem einer Teilnehmergruppe angehörenden Teilnehmer wird ein Teilnehmername gegeben, der ein die Teilnehmergruppe kennzeichnendes Zonenlabel aufweist. Außerdem wird eine Datenbank für Zonenlabel geführt, mittels derer einem in der Datenbank enthaltenen Zonenlabel der wenigstens eine Filterport zugeordnet wird, mit dem die Teilnehmer der durch das Zonenlabel gekennzeichneten Teilnehmergruppe verbunden sind. Eine über den Multicastfilter geleitete Multicast DNS-Anfragenachricht für einen Teilnehmernamen mit einem Zonenlabel, dem in der Datenbank wenigstens ein Filterport zugeordnet ist, wird über diesen wenigstens einen Filterport nur an Teilnehmer der Teilnehmergruppe mit diesem Zonenlabel weitergeleitet.
Das erfindungsgemäße Vorgehen sieht vor, dass eine Toleranzzeitdauer vorgegeben wird und der Multicastfilter dazu ausgebildet ist, Informationen über Teilnehmer, die jeweils wenigstens den Teilnehmernamen enthalten, und für jede derartige Information einen Aktualisierungszeitpunkt, zu dem die Information zuletzt aktualisiert wurde, in der Datenbank zu speichern und eine Multicast DNS-Anfragenachricht für einen Teilnehmernamen mit einer Multicast DNS-Antwortnachricht zu beantworten, wenn die angefragte Information in der Datenbank einen Aktualisierungszeitpunkt aufweist, der nicht länger als die Toleranzzeitdauer zurückliegt.

Der Kern der Erfindung besteht darin, bei der Verwendung von Multicast DNS in Kommunikationsnetzwerken den durch Multicast DNS-Nachrichten erzeugten Datenverkehr einzuschränken, indem eine Multicast DNS-Anfragenachricht nicht immer an alle Teilnehmer, sondern möglichst nur an eine kleinere Gruppe von Teilnehmern geleitet wird. Dazu werden Teilnehmergruppen von Teilnehmern gebildet und Teilnehmernamen dieser Teilnehmer mit einem die jeweilige Teilnehmergruppe kennzeichnenden Zonenlabel versehen, um aus Teilnehmernamen auf die Gruppenzugehörigkeit schließen zu können. Mittels des Multicastfilters werden Multicast DNS-Anfragenachrichten für Teilnehmernamen mit einem Zonenlabel nur an die Teilnehmer der Teilnehmergruppe dieses Zonenlabels geleitet, sofern der dem Zonenlevel zugeordnete Filterport in der Datenbank bereits bekannt ist.

Durch diese Reduzierung des von Multicast DNS erzeugten Datenverkehrs ermöglicht die Erfindung die sinnvolle Nutzung von Multicast DNS auch in Kommunikationsnetzwerken mit sehr vielen Teilnehmern, beispielsweise in flach aufgebauten Automatisierungssystemen.

Der Multicastfilter wird mit einer Cache-Funktionalität versehen, indem Multicast DNS-Anfragenachrichten von dem Multicastfilter selbst beantwortet werden, sofern die angefragte Information bereits in der Datenbank enthalten ist und ein durch die vorgegebene Toleranzzeitdauer bestimmtes Alter nicht überschreitet. Dadurch können vorteilhaft der Datenverkehr durch Multicast DNS-Nachrichten weiter reduziert und Multicast DNS-Anfragenachrichten schneller beantwortet werden. Die Einschränkung der Verwendung von in der Datenbank enthaltenen Informationen auf Informationen, deren Alter die Toleranzzeitdauer nicht überschreitet, sorgt dabei dafür, dass nur aktuelle Informationen verwendet werden, so dass Umkonfigurationen im Kommunikationsnetzwerk, beispielsweise eine neue Netzwerkadresse ohne Namensänderung des Teilnehmers, entdeckt werden und keine Inkonsistenten zwischen dem Cache und der Realität entstehen.

Eine Ausgestaltung der Erfindung sieht vor, dass eine über den Multicastfilter geleitete Multicast DNS-Anfragenachricht für einen Teilnehmernamen, der kein Zonenlabel aufweist, dem in der Datenbank bereits ein Filterport zugeordnet ist, an alle mit dem Multicastfilter verbundene Teilnehmer weitergeleitet wird.

Diese Ausgestaltung ermöglicht, Multicast DNS-Anfragenachrichten für Teilnehmernamen, deren Zonenlabel in der Datenbank noch kein Filterport zugeordnet ist, gemäß dem üblichen Multicast DNS zu behandeln, so dass auch diese Multicast DNS-Anfragenachrichten ihrem Adressaten zugeleitet werden.

Multicast DNS-Antwortnachrichten können vorteilhafterweise über den Multicastfilter geleitet werden.

Dadurch können auch Multicast DNS-Antwortnachrichten von dem Multicastfilter gezielt weitergeleitet werden. Ferner können Multicast DNS-Antwortnachrichten von dem Multicastfilter analysiert und zur Vervollständigung und Aktualisierung der Datenbank ausgewertet werden.

Eine weitere Ausgestaltung der Erfindung sieht vor, dass für eine von dem Multicastfilter an einem Filterport empfangene Multicast DNS-Antwortnachricht, die ein Zonenlabel des Absender-Teilnehmernamens aufweist, dieser Filterport und dieses Zonenlabel erfasst werden und eine Zuordnung des erfassten Filterport zu dem erfassten Zonenlabel in die Datenbank aufgenommen wird, falls die Datenbank diese Zuordnung noch nicht enthält.

Diese Ausgestaltung ermöglicht, die Datenbank durch eine Auswertung von dem Multicastfilter empfangener Multicast DNS-Antwortnachrichten zu erweitern und zu aktualisieren. Auf diese Weise wird die Datenbank allmählich vervollständigt, so dass der Datenverkehr von Multicast DNS-Nachrichten mit der Zeit abnimmt.

Eine weitere Ausgestaltung der Erfindung sieht vor, dass der Multicastfilter dazu ausgebildet ist, Teilnehmernamen von Teilnehmern, die keine Multicast DNS-Antwortnachrichten versenden, mittels wenigstens eines von einem Multicast DNS-Protokoll verschiedenen Legacy-Protokolls aufzulösen und Multicast DNS-Anfragenachrichten für derartige Teilnehmernamen nach deren Namensauflösung mit Multicast DNS-Antwortnachrichten zu beantworten.

Diese Ausgestaltung der Erfindung ermöglicht, Altgeräte, die keine Multicast DNS-Instanz zur Beantwortung von Multicast DNS-Anfragenachrichten aufweisen, als Teilnehmer in das Kommunikationsnetzwerk einzubeziehen. Dazu werden geeignete Legacy-Protokolle zur Namensauflösung verwendet und Multicast DNS-Anfragenachrichten für derartige Teilnehmer werden von dem Multicastfilter stellvertretend für die Teilnehmer beantwortet, so dass auch diese Teilnehmer für einen Absender einer Multicast DNS-Anfragenachricht an einen derartigen Teilnehmer wie ein gewöhnlicher Teilnehmer erscheint und behandelt werden kann.

Eine weitere Ausgestaltung der Erfindung sieht vor, dass der Multicastfilter dazu ausgebildet ist, periodisch zwischen Teilnehmern ausgetauschte Multicast DNS-Nachrichten zu analysieren und zur Aktualisierung der Datenbank zu verwenden.

Diese Ausgestaltung der Erfindung nutzt vorteilhaft aus, dass Multicast DNS einen periodischen Austausch von Multicast DNS-Nachrichten zwischen Teilnehmern vorsieht, der zur Aktualisierung der Datenbank verwendet werden kann.

Eine weitere Ausgestaltung der Erfindung sieht vor, dass die Teilnehmer Geräte und/oder Dienste eines Automatisierungssystems sind.

Diese Ausgestaltung zielt auf die erfindungsgemäße Verwendung von Multicast DNS in Automatisierungssystemen mit oben bereits genannten Vorteilen. Insbesondere ermöglicht diese Verwendung die Handhabung von IPv6-Adressen in Automatisierungssystemen, die aufgrund der Länge dieser Adressen problematisch ist.

Ein erfindungsgemäßer Multicastfilter zur erfindungsgemäßen Verwendung von Multicast DNS umfasst wenigstens einen Filterport zum Senden von Multicast DNS-Nachrichten, eine Speichereinheit zum Speichern der Datenbank und eine Steuereinheit, die zum Lesen und Aktualisieren der Datenbank und zum Steuern des Versendens von Multicast DNS-Anfragenachrichten in Abhängigkeit von den Multicast DNS-Anfragenachrichten und dem Inhalt der Datenbank ausgebildet ist.

Ein derartiger Multicastfilter ermöglicht die erfindungsgemäße Verwendung von Multicast DNS mit den oben genannten Vorteilen.

Vorzugsweise weist der Multicastfilter wenigstens einen Filter-Switch mit wenigstens einem Filterport auf.Dies ermöglicht die Weiterleitung von Multicast DNS-Anfragenachrichten mittels wenigstens eines Switch.

Ferner weist die Steuereinheit vorzugsweise eine anwendungsspezifische integrierte Schaltung und/oder einen Mikrocontroller, auf dem eine Software zum Lesen und Aktualisieren der Datenbank und zum Steuern des Versendens von Multicast DNS-Anfragenachrichten in Abhängigkeit von den Multicast DNS-Anfragenachrichten und dem Inhalt der Datenbank implementiert ist, auf.

Die Verwendung einer anwendungsspezifischen integrierten Schaltung ermöglicht eine besonders effiziente und schnelle Bearbeitung von Multicast DNS-Anfragenachrichten durch die Steuereinheit. Die Verwendung eines Mikrocontrollers und einer Software ist flexibler und an Änderungen und Erweiterungen der Verwendung von Multicast DNS und/oder des Kommunikationsnetzwerkes einfacher und kostengünstiger anpassbar.

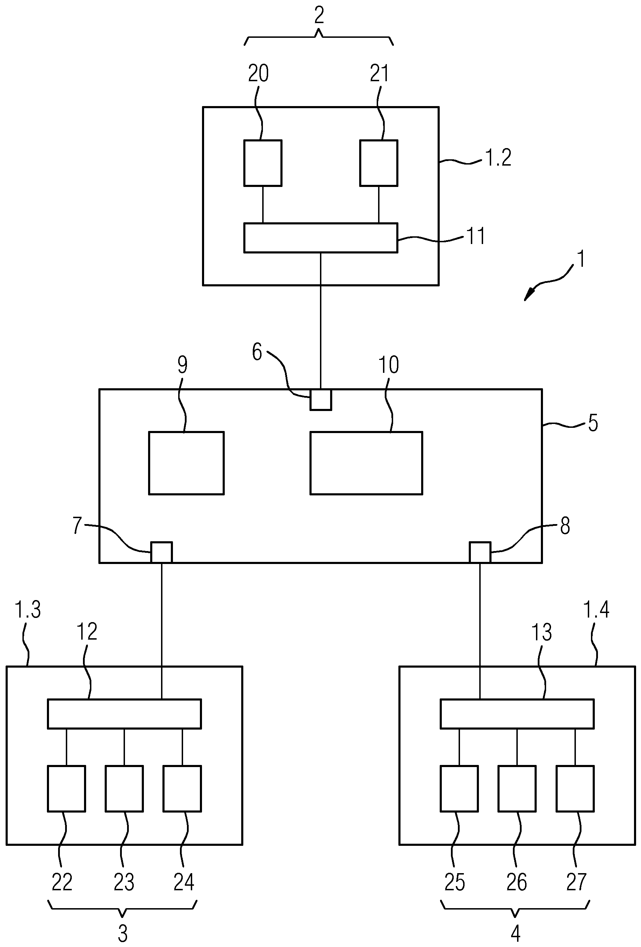

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit der Zeichnung näher erläutert werden.
Dabei zeigt die einzige Figur ein Blockdiagramm eines Kommunikationsnetzwerkes 1 mit mehreren jeweils eine Netzwerkadresse aufweisenden Teilnehmern 20 bis 27 und einem Multicastfilter 5.

Der Multicastfilter 5 dient einer im Folgenden beschriebenen Verwendung von Multicast DNS in dem Kommunikationsnetzwerk 1.

Dazu weist der Multicastfilter 5 mehrere zum Senden und Empfangen von Multicast DNS-Nachrichten geeignete Filterports 6, 7, 8, eine Speichereinheit 9 zum Speichern einer Datenbank und eine Steuereinheit 10 zum Lesen und Aktualisieren der Datenbank und zum Steuern des Versendens von Multicast DNS-Nachrichten über die Filterports 6, 7, 8 in Abhängigkeit von den Multicast DNS-Nachrichten und dem Inhalt der Datenbank auf. Der Multicastfilter 5 ist beispielsweise als ein Filter-Switch ausgebildet, der die Filterports 6, 7, 8 aufweist und in den die Speichereinheit 9 und die Steuereinheit 10 integriert sind. Alternativ können die Speichereinheit 9 und/oder die Steuereinheit 10 auch außerhalb des Filter-Switch angeordnet sein. Die Steuereinheit 10 ist beispielsweise als eine anwendungsspezifische integrierte Schaltung oder als ein Mikrocontroller, auf dem eine Software zum Lesen und Aktualisieren der Datenbank und zum Steuern des Versendens von Multicast DNS-Nachrichten implementiert ist, ausgebildet.

Die Teilnehmer 20 bis 27 werden in logische Teilnehmergruppen 2, 3, 4 gruppiert, die im dargestellten Ausführungsbeispiel jeweils über einen Gruppen-Switch 11, 12, 13 mit jeweils einem Filterport 6, 7, 8 des Multicastfilters 5 verbunden sind und jeweils ein Teilnetz 1.2, 1.3, 1.4 bilden. Vorzugsweise umfasst jede Teilnehmergruppe 2, 3, 4 technologisch zusammengehörende Teilnehmer 20 bis 27. Beispielsweise sind die Teilnehmer 20 bis 27 jeweils Geräte oder Dienste eines Automatisierungssystems, eine erste Teilnehmergruppe 2 umfasst Teilnehmer 20, 21, die einem den anderen Teilnehmern 22 bis 27 übergeordneten Leitstand des Automatisierungssystems angehören, und eine zweite Teilnehmergruppe 3 und eine dritte Teilnehmergruppe 4 umfassen jeweils Teilnehmer 22 bis 24 bzw. 25 bis 27, die Steuerungen jeweils einer Teilanlage oder Großkomponente des Automatisierungssystems (z. B. einer Serienmaschine oder Fertigungszelle) sind.

Jedem einer Teilnehmergruppe 2, 3, 4 angehörenden Teilnehmer 20 bis 27 wird ein Teilnehmername gegeben, der ein die Teilnehmergruppe 2, 3, 4 kennzeichnendes Zonenlabel aufweist, vergleichbar einer Domäne im Internet. Beispielsweise erhalten die Teilnehmer 20, 21 der ersten Teilnehmergruppe 2 das Zonenlabel "Leitstand" und werden mit einem ersten Filterport 6 verbunden, die Teilnehmer 22 bis 24 der zweiten Teilnehmergruppe 3 erhalten das Zonenlabel "ZELLE_1" und werden mit einem zweiten Filterport 7 verbunden, und die Teilnehmer 25 bis 27 der dritten Teilnehmergruppe 4 erhalten das Zonenlabel "ZELLE_2" und werden mit einem dritten Filterport 8 verbunden.

Ein vollständiger Teilnehmername setzt sich dann aus dem Hostnamen des jeweiligen Teilnehmers 20 bis 27, dem Zonenlabel und dem für Multicast DNS charakteristischen Suffix ".local" zusammen. Beispielsweise erhält ein erster Teilnehmer 22 der zweiten Teilnehmergruppe 3, der den Hostnamen "CPU1" hat, den Teilnehmernamen "CPU1.ZELLE_1.local".

Erfindungsgemäß liest der Multicastfilter 5 den Inhalt des Multicast DNS-Nachrichtenverkehrs mit und analysiert ihn in einem Multicast DNS-Analysator der Steuereinheit 10. Der Multicast DNS-Analysator analysiert, welche Teilnehmergruppe 2, 3, 4 an welchen Filterport 6, 7, 8 angeschlossen ist und gewinnt daraus Informationen, die in der Datenbank abgelegt werden. Zu Beginn ist die Datenbank entweder leer oder wird durch Einspeisung von Daten aus einer Projektierung mit Einträgen versehen. Wenn die Datenbank leer ist, werden die Multicast DNS-Nachrichten nicht gefiltert und belasten daher das Kommunikationsnetzwerk 1 wie bei dem üblichen Multicast DNS. Je mehr Information in der Datenbank bereitgestellt wird, umso mehr erfolgt jedoch eine Filterung des Multicast DNS-Nachrichtenverkehrs. Dazu besitzt der Multicastfilter 5 Einzelfilter, die verhindern können, dass eine dedizierte Multicast DNS-Nachricht an einen bestimmten Filterport 6, 7, 8 weitergeleitet wird. Diese Einzelfilter bestehen im einfachsten Fall jeweils aus einem "Schalter" der entscheidet, ob die betreffende Multicast DNS-Nachricht auf einen Filterport 6, 7, 8 des Multicastfilters 5 kopiert wird oder nicht. Die Einzelfilter für die verschieden Filterports 6, 7, 8 werden von einem Filtermanager der Steuereinheit 10 koordiniert, der seine Entscheidungen anhand der Informationen in der Datenbank trifft.

Im Folgenden wird beispielhaft der Ablauf einer Multicast DNS-Anfrage zur Namensauflösung eines Teilnehmernamens beschrieben. Dabei wird angenommen, dass in der Datenbank bereits gespeichert ist, dass die Teilnehmer 22 bis 24 der zweiten Teilnehmergruppe 3
mit dem zweiten Filterport 7 verbunden sind.

Stellt nun ein Teilnehmer 20, 21 der ersten Teilnehmergruppe 2 durch eine Multicast DNS-Anfragenachricht einen Multicast DNS-Request zur Namensauflösung des Teilnehmernamens "CPU1.ZELLE_1.local", so laufen folgende Vorgänge im Multicastfilter 5 ab:
- Der Multicast DNS-Analysator stellt fest, dass es sich um einen Namensauflösungsrequest handelt. Er extrahiert das Zonenlabel des angefragten Teilnehmernamens und übergibt dieses Zonenlabel dem Filtermanager.
- Der Filtermanager prüft durch Anfrage in der Datenbank, ob für dieses Zonenlabel (hier ZELLE_1) ein Filterport 6, 7, 8 bekannt ist, was in diesem Beispiel der Fall sein soll.
- Die Anfrage in der Datenbank liefert den Filterport 7 zurück, dem das angefragte Zonenlabel zugeordnet ist.
- Der Filtermanager veranlasst nun den Multicastfilter 5, die Multicast DNS-Anfragenachricht an den Filterport 7 zu kopieren, verhindert aber, dass dieses Paket an einen anderen Filterport 6, 8 kopiert wird. Dadurch wird das Kommunikationsnetzwerk 1 an den anderen Filterports 6, 8 entlastet, weil es die betreffende Multicast DNS-Anfragenachricht dort gar nicht erst erhält. Außerdem werden auch alle Multicast DNS-Instanzen der nicht in der zweiten Teilnehmergruppe 3 enthaltenen Teilnehmer 20 bis 27 entlastet, weil sie nun nicht mehr prüfen müssen, ob ihnen das angefragte Ziel bekannt ist.

Nicht zuletzt wird auch der Multicastfilter 5 davon entlastet, die Multicast DNS-Anfragenachricht auf nicht betroffene Filterports 6, 8 zu kopieren. Anstelle dieses Kopierens ist nun nur noch ein Weiterleiten an den ermittelten Filterport 7 nötig.

Die beschriebenen Vorgänge gelten nicht nur für Namensauflösungen von Teilnehmernamen zu Netzwerkadressen, sondern analog für andere Auflösungsanfragen, z.B. für Dienste (z. B. Name -> Netzwerkadresse/Protokoll/Port).

Wenn das Ziel einer Namensauflösung noch nicht bekannt ist, laufen folgende Vorgänge ab, nachdem beispielsweise eine Anfrage zur Namensauflösung des Teilnehmernamens "CPU1.ZELLE_1.local" von einem Teilnehmer 20, 21 der ersten Teilnehmergruppe 2 durch eine Multicast DNS-Anfragenachricht gesendet wurde:
- Der Multicast DNS-Analysator stellt fest, dass es sich um einen Namensauflösungsrequest handelt. Er extrahiert das Zonenlabel des angefragten Namens und übergibt es dem Filtermanager.
- Der Filtermanager prüft durch Anfrage in der Datenbank, ob für dieses Zonenlabel (hier ZELLE_1) ein Filterport 6, 7, 8 bekannt ist, was in diesem Beispiel nicht der Fall sein soll.
- Die Anfrage in der Datenbank liefert keinen Filterport 6, 7, 8 zurück, weil dieser nicht bekannt ist
- Der Filtermanager veranlasst nun den Multicastfilter 5, die Multicast DNS-Anfragenachricht an alle Filterports 6, 7, 8 zu kopieren.
- Die Multicast DNS-Anfragenachricht zur Namensauflösung wird nun von der Multicast DNS-Instanz des ersten Teilnehmers 22 der zweiten Teilnehmergruppe 2, der den Hostnamen CPU1 trägt, beantwortet und an den Multicastfilter 5 zurückgeschickt. Dort erkennt der Multicast DNS-Analysator, dass es sich um eine Multicast DNS-Antwortnachricht handelt, extrahiert das Zonenlabel der Multicast DNS-Antwortnachricht und vermerkt das Zonenlabel sowie den Filterport 7, über den die Multicast DNS-Antwortnachricht empfangen wurde in der Datenbank. Ab diesem Zeitpunkt steht die Information, dass dem Zonenlabel "ZELLE_1" der zweite Filterport 7 zugeordnet ist, in der Datenbank zur Verfügung und kann nachfolgend zur Filterung herangezogen werden.

Neben der Analyse von Multicast DNS-Antwortnachrichten kann der Multicast DNS-Analysator auch die zyklisch zwischen Multicast DNS-Instanzen ausgetauschten Informationen analysieren und daraus entsprechende Einträge in der Datenbank erzeugen.

Die Erfindung ermöglicht in einer weiteren Ausführungsform eine einfache Einbindung von Altgeräten ohne eigene Multicast DNS-Instanz in das beschriebene Verfahren zur Namensauflösung. Oftmals besitzen derartige Altgeräte bereits technologische Namen, die teilweise auch per Netz-Request abfragbar sind. Aber hierarchische Strukturierungen oder Multicast DNS-Unterstützung der Altgeräte gibt es bisher nicht.

Je nachdem, an welchem Teilnetz 1.2, 1.3, 1.4 ein Altgerät angeschlossen wird, "erbt" es das Zonenlabel dieses Teilnetzes 1.2, 1.3, 1.4. Der Multicastfilter 5 erhält für die Migrationsunterstützung von derartigen Altgeräten eine weitere Zusatzkomponente, die hier als "Legacy-Responder" bezeichnet wird und aus folgenden Teilkomponenten besteht:
- einem Nameresolver zur Namensauflösung für alle zu unterstützenden Altgeräte und -Protokolle,
- ein Multicast DNS-Proxy.

Zusätzlich sind Erweiterungen des beschriebenen Multicastfilters 5 derart notwendig, dass jetzt nicht nur Zonenlabel in der Datenbank gespeichert werden, sondern vollständige Multicast DNS-Teilnehmernamen.

Bei einem Request zur Namensauflösung für ein Altgerät ohne eigene Multicast DNS-Instanz laufen folgende Vorgänge ab:
- Der Multicast DNS-Analysator stellt fest, dass es sich im einen Namensauflösungsrequest handelt. Er extrahiert den kompletten Zielnamen aus der Anfrage und übergibt ihn dem Filtermanager.
- Der Filtermanager prüft durch Anfrage in der Datenbank, ob dieser Name existiert.
- Die Anfrage in der Datenbank liefert zurück, dass zwar das Zonenlabel bekannt ist und ihm ein Filterport 6, 7, 8 zugeordnet ist, aber der Zielname nicht bekannt ist.
- Der Filtermanager veranlasst nun den Multicastfilter 5, die Multicast DNS-Anfragenachricht wie oben beschrieben an den entsprechenden Filterport 6, 7, 8 zu kopieren bzw. weiterzuleiten. Weiterhin aktiviert er jetzt aber auch den Legacy-Responder.
- Der Legacy-Responder prüft, ob der betreffende Hostname ohne das Zonenlabel und den Suffix ".local" unter Verwendung seiner bekannten Legacy-Protokolle auflösbar ist. Ist dies der Fall, erhält er die Netzwerkadresse des Altgerätes und gegebenenfalls weitere Informationen zu Diensten auf dem Altgerät. Diese Informationen gibt er an den Multicast DNS-Proxy weiter.
- Der Multicast DNS-Proxy generiert daraus die erwartete Multicast DNS-Antwortnachricht für die Anfrage und schickt diese an den Requestor zurück. Dieser erhält eine Multicast DNS-Antwortnachricht und behandelt das Altgerät wie ein Multicast DNS-konformes Gerät.

Die Erfindung ermöglicht in einer weiteren Ausgestaltung eine Entlastung des Datenverkehrs durch eine Multicast DNS-Responder Cache Funktionalität. Zu eingehenden Multicast DNS-Anfragenachrichten werden dazu auf dem kurzen Weg im Multicastfilter 5 durch einen Multicast DNS-Responder die passenden Multicast DNS-Antwortnachrichten gebildet, ohne die Multicast DNS-Anfragenachricht in das Kommunikationsnetzwerk 1 weiterzuleiten. Dazu wird zu jedem Eintrag in der Datenbank ein Aktualisierungszeitpunkt ergänzt, der das Alter des Eintrags definiert. Bis zu einer durch eine vorgegebene Toleranzzeitdauer definierte Altersgrenze werden Multicast DNS-Anfragenachrichten aus dem "Cache", also mittels in der Datenbank enthaltenen Informationen bedient. Eine Multicast DNS-Anfragenachricht, für die in der Datenbank keine Information oder eine veraltete Information (d. h. eine Information, die älter als die definierte Altergrenze ist) gespeichert ist, wird wie eine Multicast DNS-Anfragenachricht gemäß der obigen Beschreibung behandelt.
Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Kommunikationsnetzwerk
- 1.2, 1.3, 1.4: Teilnetz
- 2, 3, 4: Teilnehmergruppe
- 5: Multicastfilter
- 6, 7, 8: Filterport
- 9: Speichereinheit
- 10: Steuereinheit
- 11, 12, 13: Gruppen-Switch
- 20 bis 27: Teilnehmer

## Patentansprüche

1. Verfahren zur Verwendung von Multicast DNS in einem Kommunikationsnetzwerk (1) mit mehreren jeweils eine Netzwerkadresse aufweisenden Teilnehmern (20 bis 27), wobei
- das Kommunikationsnetzwerk (1) mit einem Multicastfilter (5) versehen wird, der wenigstens einen zum Senden von Multicast DNS-Nachrichten geeigneten Filterport (6, 7, 8) aufweist und über den Multicast DNS-Anfragenachrichten geleitet werden,
- Teilnehmergruppen (2, 3, 4) von Teilnehmern (20 bis 27) definiert werden,
- die Teilnehmer (20 bis 27) jeder Teilnehmergruppe (2, 3, 4) mit jeweils wenigstens einem Filterport (6, 7, 8) verbunden werden,
- jedem einer Teilnehmergruppe (2, 3, 4) angehörenden Teilnehmer (20 bis 27) ein Teilnehmername gegeben wird, der ein die Teilnehmergruppe (2, 3, 4) kennzeichnendes Zonenlabel aufweist,
- eine Datenbank für Zonenlabel geführt wird, mittels derer einem in der Datenbank enthaltenen Zonenlabel der wenigstens eine Filterport (6, 7, 8) zugeordnet wird, mit dem die Teilnehmer (20 bis 27) der durch das Zonenlabel gekennzeichneten Teilnehmergruppe (2, 3, 4) verbunden sind,
wobei
- eine Toleranzzeitdauer vorgegeben wird und der Multicastfilter (5) dazu ausgebildet ist, Informationen über Teilnehmer (20 bis 27), die jeweils wenigstens den Teilnehmernamen enthalten, und für jede derartige Information einen Aktualisierungszeitpunkt, zu dem die Information zuletzt aktualisiert wurde, in der Datenbank zu speichern und eine Multicast DNS-Anfragenachricht für einen Teilnehmernamen bereits mit einer Multicast DNS-Antwortnachricht zu beantworten, wenn die angefragte Information in der Datenbank einen Aktualisierungszeitpunkt aufweist, der nicht länger als die Toleranzzeitdauer zurückliegt und
ansonsten eine über den Multicastfilter (5) geleitete Multicast DNS-Anfragenachricht für einen Teilnehmernamen mit einem Zonenlabel, dem in der Datenbank wenigstens ein Filterport (6, 7, 8) zugeordnet ist, über diesen wenigstens einen Filterport (6, 7, 8) nur an Teilnehmer (20 bis 27) der Teilnehmergruppe (2, 3, 4) mit diesem Zonenlabel weitergeleitet wird.

2. Verfahren nach Anspruch 1,
**dadurch gekennzeichnet, dass** eine über den Multicastfilter (5) geleitete Multicast DNS-Anfragenachricht für einen Teilnehmernamen, der kein Zonenlabel aufweist, dem in der Datenbank bereits ein Filterport (6, 7, 8) zugeordnet ist, an alle mit dem Multicastfilter (5) verbundene Teilnehmer (20 bis 27) weitergeleitet wird.

3. Verfahren nach Anspruch 1 oder 2,
**dadurch gekennzeichnet, dass** für eine von dem Multicastfilter (5) an einem Filterport (6, 7, 8) empfangene Multicast DNS-Antwortnachricht, die ein Zonenlabel des Absender-Teilnehmernamens aufweist, dieser Filterport (6, 7, 8) und dieses Zonenlabel erfasst werden und eine Zuordnung des erfassten Filterport (6, 7, 8) zu dem erfassten Zonenlabel in die Datenbank aufgenommen wird, falls die Datenbank diese Zuordnung noch nicht enthält.

4. Verfahren nach einem der vorhergehenden Ansprüche,**dadurch gekennzeichnet, dass** der Multicastfilter (5) dazu ausgebildet ist, Teilnehmernamen von Teilnehmern (20 bis 27), die keine Multicast DNS-Antwortnachrichten versenden, mittels wenigstens eines von einem Multicast DNS-Protokoll verschiedenen Legacy-Protokolls aufzulösen und Multicast DNS-Anfragenachrichten für derartige Teilnehmernamen nach deren Namensauflösung mit Multicast DNS-Antwortnachrichten zu beantworten.

5. Verfahren nach einem der vorhergehenden Ansprüche,
**dadurch gekennzeichnet, dass** der Multicastfilter (5) dazu ausgebildet ist, periodisch zwischen Teilnehmern (20 bis 27) ausgetauschte Multicast DNS-Nachrichten zu analysieren und zur Aktualisierung der Datenbank zu verwenden.

6. Verfahren nach einem der vorhergehenden Ansprüche,
**dadurch gekennzeichnet, dass** die Teilnehmer (20 bis 27) Geräte und/oder Dienste eines Automatisierungssystems sind.

7. Multicastfilter (5) zur Verwendung von Multicast DNS in einem Kommunikationsnetzwerk (1) mit mehreren jeweils eine Netzwerkadresse aufweisenden Teilnehmern (20 bis 27), umfassend
- wenigstens einen zum Senden von Multicast DNS-Nachrichten geeigneten Filterport (6, 7, 8) zum Senden von Multicast DNS-Nachrichten, mit Teilnehmergruppen (2, 3, 4) von Teilnehmern (20 bis 27), wobei die Teilnehmer (20 bis 27) jeder Teilnehmergruppe (2, 3, 4) mit jeweils wenigstens einem Filterport (6, 7, 8) verbunden sind, und jedem einer Teilnehmergruppe (2, 3, 4) angehörenden Teilnehmer (20 bis 27) ein Teilnehmername hat, der ein die Teilnehmergruppe (2, 3, 4) kennzeichnendes Zonenlabel aufweist,
- eine Speichereinheit (9) zum Speichern der Datenbank, für Zonenlabel, mittels derer einem in der Datenbank enthaltenen Zonenlabel der wenigstens eine Filterport (6, 7, 8) zugeordnet wird, mit dem die Teilnehmer (20 bis 27) der durch das Zonenlabel gekennzeichneten Teilnehmergruppe (2, 3, 4) verbunden ist
- und eine Steuereinheit (10), die zum Lesen und Aktualisieren der Datenbank und zum Steuern des Versendens von Multcast DNS-Anfragenachrichten in Abhängigkeit von den Multicast DNS-Anfragenachrichten und dem Inhalt der Datenbank ausgebildet ist, wobei
- eine Toleranzzeitdauer vorgegeben ist und der Multicastfilter (5) dazu ausgebildet ist, Informationen über Teilnehmer (20 bis 27), die jeweils wenigstens den Teilnehmernamen enthalten, und für jede derartige Information einen Aktualisierungszeitpunkt, zu dem die Information zuletzt aktualisiert wurde, in der Datenbank zu speichern und eine Multicast DNS-Anfragenachricht für einen Teilnehmernamen bereits mit einer Multicast DNS-Antwortnachricht zu beantworten, wenn die angefragte Information in der Datenbank einen Aktualisierungszeitpunkt aufweist, der nicht länger als die Toleranzzeitdauer zurückliegt und
- der Multicastfilter (5) ansonsten eine über ihn geleitete Multicast DNS-Anfragenachricht für einen Teilnehmernamen mit einem Zonenlabel, dem in der Datenbank wenigstens ein Filterport (6, 7, 8) zugeordnet ist, über diesen wenigstens einen Filterport (6, 7, 8) nur an Teilnehmer (20 bis 27) der Teilnehmergruppe (2, 3, 4) mit diesem Zonenlabel weiterleitet.

8. Multicastfilter (5) nach Anspruch 7,
**dadurch gekennzeichnet, dass** die Steuereinheit (10) eine anwendungsspezifische integrierte Schaltung aufweist.

9. Multicastfilter (5) nach einem der Ansprüche 7 oder 8,
**dadurch gekennzeichnet, dass** die Steuereinheit (10) einen Mikrocontroller aufweist, auf dem eine Software zum Lesen und Aktualisieren der Datenbank und zum Steuern des Versendens von Multicast DNS-Anfragenachrichten in Abhängigkeit von den Multicast DNS-Anfragenachrichten und dem Inhalt der Datenbank implementiert ist.

## Claims

1. Method for using multicast DNS in a communication network (1) having a plurality of subscribers (20 to 27) each having a network address, wherein
- the communication network (1) is provided with a multicast filter (5) which has at least one filter port (6, 7, 8) suitable for transmitting multicast DNS messages and via which multicast DNS request messages are passed,
- subscriber groups (2, 3, 4) of subscribers (20 to 27) are defined,
- the subscribers (20 to 27) in each subscriber group (2, 3, 4) are connected to at least one filter port (6, 7, 8) in each case,
- each subscriber (20 to 27) belonging to a subscriber group (2, 3, 4) is given a subscriber name which has a zone label identifying the subscriber group (2, 3, 4),
- a database for zone labels is managed, by means of which a zone label contained in the database is assigned the at least one filter port (6, 7, 8) to which the subscribers (20 to 27) in the subscriber group (2, 3, 4) identified by the zone label are connected,
wherein
- a tolerance period is predefined, and the multicast filter (5) is designed to store information relating to subscribers (20 to 27) each containing at least the subscriber name and, for each item of such information, an update time, at which the information was last updated, in the database and to already respond to a multicast DNS request message for a subscriber name with a multicast DNS response message if the requested information in the database has an update time which lags behind by no longer than the tolerance period, and otherwise a multicast DNS request message, passed via the multicast filter (5), for a subscriber name with a zone label which is assigned at least one filter port (6, 7, 8) in the database, is forwarded only to subscribers (20 to 27) in the subscriber group (2, 3, 4) having this zone label via this at least one filter port (6, 7, 8).

2. Method according to Claim 1,
**characterized in that** a multicast DNS request message, passed via the multicast filter (5), for a subscriber name which does not have a zone label which has already been assigned a filter port (6, 7, 8) in the database, is forwarded to all subscribers (20 to 27) connected to the multicast filter (5).

3. Method according to Claim 1 or 2,
**characterized in that**, for a multicast DNS response message which is received by the multicast filter (5) at a filter port (6, 7, 8) and has a zone label of the sender subscriber name, this filter port (6, 7, 8) and this zone label are captured and an assignment of the captured filter port (6, 7, 8) to the captured zone label is recorded in the database if the database does not yet contain this assignment.

4. Method according to one of the preceding claims,
**characterized in that** the multicast filter (5) is designed to resolve subscriber names of subscribers (20 to 27) which do not transmit any multicast DNS response messages by means of at least one legacy protocol which differs from a multicast DNS protocol and to respond to multicast DNS request messages for such subscriber names after their name resolution with multicast DNS response messages.

5. Method according to one of the preceding claims,
**characterized in that** the multicast filter (5) is designed to analyse multicast DNS messages periodically interchanged between subscribers (20 to 27) and to use them to update the database.

6. Method according to one of the preceding claims,
**characterized in that** the subscribers (20 to 27) are devices and/or services of an automation system.

7. Multicast filter (5) for using multicast DNS in a communication network (1) having a plurality of subscribers (20 to 27) each having a network address, comprising
- at least one filter port (6, 7, 8) which is suitable for transmitting multicast DNS messages and is intended to transmit multicast DNS messages, with subscriber groups (2, 3, 4) of subscribers (20 to 27), wherein the subscribers (20 to 27) in each subscriber group (2, 3, 4) are connected to at least one filter port (6, 7, 8) in each case, and each subscriber (20 to 27) belonging to a subscriber group (2, 3, 4) has a subscriber name having a zone label which identifies the subscriber group (2, 3, 4),
- a storage unit (9) for storing the database for zone labels, by means of which a zone label contained in the database is assigned the at least one filter port (6, 7, 8) to which the subscribers (20 to 27) in the subscriber group (2, 3, 4) identified by the zone label are connected,
- and a control unit (10) which is designed to read and update the database and to control the transmission of multicast DNS request messages on the basis of the multicast DNS request messages and the content of the database, wherein
- a tolerance period is predefined, and the multicast filter (5) is designed to store information relating to subscribers (20 to 27) each containing at least the subscriber name and, for each item of such information, an update time, at which the information was last updated, in the database and to already respond to a multicast DNS request message for a subscriber name with a multicast DNS response message if the requested information in the database has an update time which lags behind by no longer than the tolerance period, and
- the multicast filter (5) otherwise forwards a multicast DNS request message, passed via it, for a subscriber name having a zone label which is assigned at least one filter port (6, 7, 8) in the database, only to subscribers (20 to 27) in the subscriber group (2, 3, 4) having this zone label via this at least one filter port (6, 7, 8).

8. Multicast filter (5) according to Claim 7,
**characterized in that** the control unit (10) has an application-specific integrated circuit.

9. Multicast filter (5) according to either of Claims 7 and 8, **characterized in that** the control unit (10) has a microcontroller on which software for reading and updating the database and for controlling the transmission of multicast DNS request messages on the basis of the multicast DNS request messages and the content of the database is implemented.

## Revendications

1. Procédé d'utilisation de multidiffusion DNS dans un réseau de communication (1) comportant plusieurs usagers (20 à 27) ayant chacun une adresse réseau,
- le réseau de communication (1) étant pourvu d'un filtre de multidiffusion (5) qui comporte au moins un port de filtre (6, 7, 8) adapté pour émettre des messages de multidiffusion DNS et via lequel sont acheminés des messages de requête de multidiffusion DNS ;
- des groupes (2, 3, 4) d'usagers (20 à 27) étant définis ;
- les usagers (20 à 27) de chaque groupe d'usagers (2, 3, 4) étant reliés à respectivement au moins un port de filtre (6, 7, 8) ;
- à chaque usager (20 à 27) appartenant à un groupe d'usagers (2, 3, 4) étant attribué un nom d'usager qui comporte une étiquette de zone identifiant le groupe d'usagers (2, 3, 4) ;
- une base de données d'étiquettes de zone étant tenue, au moyen de laquelle est affecté à une étiquette de zone contenue dans la base de données l'au moins un port de filtre (6, 7, 8) auquel sont reliés les usagers (20 à 27) du groupe d'usagers (2, 3, 4) identifié par l'étiquette de zone,
- une durée de tolérance étant spécifiée et le filtre de multidiffusion (5) étant conçu pour sauvegarder dans la base de données des informations sur des usagers (20 à 27), qui contiennent respectivement au moins le nom d'usager, et, pour chaque telle information, un instant de mise à jour auquel l'information a été mise à jour en dernier lieu, et pour déjà répondre à un message de requête de multidiffusion DNS pour un nom d'usager par un message de réponse de multidiffusion DNS lorsque l'information demandée comporte, dans la base de données, un instant de mise à jour qui n'est pas plus ancien que la durée de tolérance et
- sinon un message de requête de multidiffusion DNS acheminé via le filtre de multidiffusion (5) pour un nom d'usager avec une étiquette de zone à laquelle est associé, dans la base de données, au moins un port de filtre (6, 7, 8), étant réacheminé via cet au moins un port de filtre (6, 7, 8) uniquement vers des usagers (20 à 27) du groupe d'usagers (2, 3, 4) ayant cette étiquette de zone.

2. Procédé selon la revendication 1, **caractérisé en ce qu'**un message de requête de multidiffusion DNS acheminé via le filtre de multidiffusion (5) pour un nom d'usager ne présentant pas d'étiquette de zone à laquelle est déjà associé un port de filtre (6, 7, 8) dans la base de données est réacheminé vers tous les usagers (20 à 27) reliés au filtre de multidiffusion (5).

3. Procédé selon la revendication 1 ou 2, **caractérisé en ce que**, pour un message de requête de multidiffusion DNS reçu par le filtre de multidiffusion (5) au niveau d'un port de filtre (6, 7, 8), et qui présente une étiquette de zone du nom de l'usager émetteur, ce port de filtre (6, 7, 8) et cette étiquette de zone sont saisis et une affectation du port de filtre saisi (6, 7, 8) à l'étiquette de zone saisie est enregistrée dans la base de données si la base de données ne contient pas encore cette affectation.

4. Procédé selon l'une des revendications précédentes, **caractérisé en ce que** le filtre de multidiffusion (5) est conçu pour décomposer des noms d'usagers (20 à 27) qui n'envoient pas de messages de réponse de multidiffusion DNS au moyen d'au moins un protocole de terrain différent d'un protocole de multidiffusion DNS et pour répondre par des messages de réponse de multidiffusion DNS à des messages de requête de multidiffusion DNS pour de tels noms d'usagers après leur décomposition.

5. Procédé selon l'une des revendications précédentes, **caractérisé en ce que** le filtre de multidiffusion (5) est conçu pour analyser périodiquement des messages de multidiffusion DNS échangés entre les usagers (20 à 27) et pour les utiliser pour la mise à jour de la base de données.

6. Procédé selon l'une des revendications précédentes, **caractérisé en ce que** les usagers (20 à 27) sont des appareils et/ou des services d'un système d'automatisation.

7. Filtre de multidiffusion (5) pour utilisation de multidiffusion DNS dans un réseau de communication (1) comportant plusieurs usagers (20 à 27) ayant chacun une adresse réseau, comprenant :
- au moins un port de filtre (6, 7, 8), adapté pour émettre des messages de multidiffusion DNS, pour émettre des messages de multidiffusion DNS, avec des groupes (2, 3, 4) d'usagers (20 à 27) étant définis ; les usagers (20 à 27) de chaque groupe d'usagers (2, 3, 4) étant reliés à respectivement au moins un port de filtre (6, 7, 8), et chaque usager (20 à 27) appartenant à un groupe d'usagers (2, 3, 4) ayant un nom d'usager qui comporte une étiquette de zone identifiant le groupe d'usagers (2, 3, 4) ;
- une unité de mémoire (9) pour sauvegarder la base de données pour des étiquettes de zone, au moyen de laquelle est affecté à une étiquette de zone contenue dans la base de données l'au moins un port de filtre (6, 7, 8) auquel sont reliés les usagers (20 à 27) du groupe d'usagers (2, 3, 4) identifié par l'étiquette de zone,
- et une unité de commande (10) qui est conçue pour lire la base de données et la mettre à jour et pour commander l'envoi de messages de requête de multidiffusion DNS en fonction des messages de requête de multidiffusion DNS et du contenu de la base de données,
- une durée de tolérance étant spécifiée et le filtre de multidiffusion (5) étant conçu pour sauvegarder dans la base de données des informations sur des usagers (20 à 27), qui contiennent respectivement au moins le nom d'usager, et, pour chaque telle information, un instant de mise à jour auquel l'information a été mise à jour en dernier lieu, et pour déjà répondre à un message de requête de multidiffusion DNS pour un nom d'usager par un message de réponse de multidiffusion DNS lorsque l'information demandée comporte, dans la base de données, un instant de mise à jour qui n'est pas plus ancien que la durée de tolérance et
- sinon, le filtre de multidiffusion (5) réacheminant un message de requête de multidiffusion DNS acheminé via lui-même pour un nom d'usager avec une étiquette de zone à laquelle est associé, dans la base de données, au moins un port de filtre (6, 7, 8), via cet au moins un port de filtre (6, 7, 8) uniquement vers des usagers (20 à 27) du groupe d'usagers (2, 3, 4) ayant cette étiquette de zone.

8. Filtre de multidiffusion (5) selon la revendication 7, **caractérisé en ce que** l'unité de commande (10) comporte un circuit intégré spécifique à l'application.

9. Filtre de multidiffusion (5) selon l'une des revendications 7 ou 8, **caractérisé en ce que** l'unité de commande (10) comporte un microcontrôleur sur lequel est implanté un logiciel de lecture et de mise à jour de la base de données et de commande de l'envoi de messages de requête de multidiffusion DNS en fonction des messages de requête de multidiffusion DNS et du contenu de la base de données.
